(19) Europäisches Patentamt
European Patent Office
Office européen des brevets

(11) **EP 4 125 246 A1**

(12) **EUROPEAN PATENT APPLICATION**

(43) Date of publication:
**01.02.2023   Bulletin 2023/05**

(21) Application number: **22187724.4**

(22) Date of filing: **29.07.2022**

(51) International Patent Classification (IPC):
**H04L 25/03** (2006.01)

(52) Cooperative Patent Classification (CPC):
**H04L 25/03165; H04L 25/03019;** H04L 2025/03802

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:   **30.07.2021   CN 202110874549**

(71) Applicant: **Nokia Solutions and Networks Oy 02610 Espoo (FI)**

(72) Inventors:
• **Huang, Xiaoan**
  **Shanghai, 200000 (CN)**
• **Zhang, Dongxu**
  **Shanghai, 200129 (CN)**
• **Zhang, Kaibin**
  **Shanghai, 201204 (CN)**

(74) Representative: **DREISS Patentanwälte PartG mbB**
**Friedrichstraße 6**
**70174 Stuttgart (DE)**

(54)   **METHOD, DEVICE, APPARATUS AND STORAGE MEDIUM FOR MULTILEVEL NEURAL NETWORK-BASED SIGNAL EQUALIZATION**

(57)   The present disclosure relates to device, method, apparatus and computer-readable storage medium for communications. Multilevel neural network based signal equalization method and apparatus are provided in the communication system. In the method, the second communication device determines and sends to the first communication device the configuration parameters to be used by a first communication device for configuring an equalizer at the first communication device, wherein the configuration parameters indicate one activation function class of a plurality of activation function classes for configuring the equalizer. The method comprises configuring, by the first communication device, the equalizer at the first communication device with the configuration parameters. In this way, the neural network based equalizer can better adapt to the high-speed access networks. Moreover, the first communication can implement the multilevel neural network equalizer based on the configuration parameters indicating the activation function class. Thus, the scale of the neural network may be controlled within a reasonable range and the system performance may be further boosted.

1100

Receive from a second communication device configuration parameters to be used by the first communication device for configuring an equalizer at the first communication device, the configuration parameters indicating one activation function class of a plurality of activation function classes for configuring the equalizer — 1110

Configure the equalizer with the configuration parameters — 1120

Fig.11

## Description

### FIELD

The present disclosure relates to the field of communications, and more specifically, to method, apparatus, device and computer-readable storage medium for communications.

### BACKGROUND

User traffic increases with the development of communication technologies. To satisfy the ever-growing demands of the traffic, high-speed access network is extensively applied in various communication systems (such as, Passive Optical Network PON, wireless local network WiFi and cellular communication network etc.). Equalization technology, which can provide cost-effective high-speed communications of the hardware devices via the software based algorithms, has drawn more and more attention and been widely applied in various communication systems.

In recent years, as the neural network (NN) advances, the neural network based nonlinear equalization technology has been proposed to better compensate for transmission impairments (including linear and nonlinear distortions etc.) in the communications. However, it will be further discussed how to configure the equalizer to adapt to demands of various types of high speed access networks while control the scale of the neural network within a reasonable range for better performance.

### SUMMARY

In a first aspect of the present disclosure, there is provided a first communication device, comprising: at least one processor; and at least one memory including computer program codes, wherein the at least one memory and the computer program codes are configured to, together with the at least one processor, enable the first communication device to: receive from a second communication device configuration parameters to be used by the first communication device for configuring an equalizer at the first communication device, the configuration parameters indicating one activation function class of a plurality of activation function classes for configuring the equalizer; and configure the equalizer with the configuration parameters.

In a second aspect of the present disclosure, there is provided a second communication device, comprising: at least one processor; and at least one memory including computer program codes,

The at least one memory and the computer program codes are configured to, together with the at least one processor, enable the second communication device to: determine configuration parameters to be used by a first communication device for configuring an equalizer at the first communication device, the configuration parameters indicating one activation function class of a plurality of activation function classes for configuring the equalizer; and send to the first communication device the configuration parameters determined.

In a third aspect of the present disclosure, there is provided a method executed at the first communication device, comprising: receiving from a second communication device configuration parameters to be used by the first communication device for configuring an equalizer at the first communication device, the configuration parameters indicating one activation function class of a plurality of activation function classes for configuring the equalizer; and configuring the equalizer with the configuration parameters.

In a fourth aspect of the present disclosure, there is provided a method executed at the second communication device, comprising: determining configuration parameters to be used by a first communication device for configuring an equalizer at the first communication device, the configuration parameters indicating one activation function class of a plurality of activation function classes for configuring the equalizer; and sending to the first communication device the configuration parameters determined.

In a fifth aspect of the present disclosure, there is provided a first communication apparatus, comprising a component for receiving from a second communication device configuration parameters to be used by the first communication device for configuring an equalizer at the first communication device, the configuration parameters indicating one activation function class of a plurality of activation function classes for configuring the equalizer; and a component for configuring the equalizer with the configuration parameters.

In a sixth aspect of the present disclosure, there is provided a second communication apparatus, comprising a component for determining configuration parameters to be used by a first communication device for configuring an equalizer at the first communication device, the configuration parameters indicating one activation function class of a plurality of activation function classes for configuring the equalizer; and a component for sending to the first communication device the configuration parameters determined.

In a seventh aspect of the present disclosure, there is provided a computer-readable storage medium stored thereon with computer programs, the computer programs are configured to, when executed by a processor of an apparatus, cause the apparatus to perform the method according to the above third aspect.

In an eighth aspect of the present disclosure, there is provided a computer-readable storage medium stored thereon with computer programs, the computer programs are configured to, when executed by a processor of an apparatus, cause the apparatus to perform the method according to the above fourth aspect.

It should be appreciated that the contents described in this Summary are not intended to identify key or essential features of the embodiments of the present disclosure, or limit the scope of the present disclosure. Other features of the present disclosure will be understood more easily through the following description.

## BRIEF DESCRIPTION OF THE DRAWINGS

Through the following detailed description with reference to the accompanying drawings, the features, advantages and aspects of every implementation of the present disclosure will become more apparent. Several implementations of the present disclosure are illustrated here by way of examples, rather than limitations. In the drawings:

Fig. 1 illustrates an example environment in which embodiments according to the present disclosure may be implemented;

Fig. 2 illustrates an example interaction procedure between the first and second communication devices in accordance with embodiments of the present disclosure;

Fig. 3 illustrates an example block diagram of configuring the multilevel neural network based equalizer in accordance with example embodiments of the present disclosure;

Fig. 4 illustrates an example interaction procedure in accordance with embodiments of the present disclosure;

Fig. 5 illustrates an example test environment in accordance with embodiments of the present disclosure;

Fig. 6 illustrates a function curve of a specific activation function (AF) in accordance with specific embodiments of the present disclosure;

Fig. 7A illustrates an example block diagram of a traditional neural network based equalizer with single output;

Fig. 7B illustrates an example block diagram of a multilevel neural network based equalizer with single output in accordance with specific embodiments of the present disclosure;

Figs. 8A and 8B illustrate performance comparison curves under the application scenario of the single-output neural network;

Fig. 9A illustrates an example block diagram of a traditional equalizer of a neural network with parallel outputs;

Fig. 9B illustrates an example block diagram of the multilevel neural network based equalizer with parallel outputs in accordance with specific embodiments of the present disclosure;

Figs. 10A and 10B illustrate performance comparison curves under the application scenario of the parallel-output neural network;

Fig. 11 illustrates a flowchart of a method executed at the first communication device in accordance with embodiments of the present disclosure;

Fig. 12 illustrates a flowchart of a method executed at the second communication device in accordance with embodiments of the present disclosure;

Fig. 13 illustrates a schematic diagram of an apparatus suitable for implementing embodiments of the present disclosure; and

Fig. 14 illustrates a schematic diagram of a computer-readable medium suitable for implementing embodiments of the present disclosure.

Throughout the present disclosure, same or similar reference signs indicate same or similar elements.

## DETAILED DESCRIPTION OF EMBODIMENTS

Principles and spirits of the present disclosure will be described below with reference to various example embodiments illustrated in the drawings. It should be appreciated that description of those specific embodiments is merely to enable those skilled in the art to better understand and implement the present disclosure and is not intended for limiting the scope of the present disclosure in any manner.

As used herein, the term "includes" and its variants should be read as open-ended terms that mean "includes, but is not limited to". The term "based on" should be read as "based at least in part on". The term "one embodiment" or "this embodiment" should be read as "at least one embodiment". The terms "first", "second" and so on can refer to same or different objects. The following text may include other explicit and implicit definitions.

As used herein, the term "determine" encompasses a variety of actions, for example, "determine" can comprise computation, calculation, process, export, research, look up (such as looking up in a table, a database or a further data structure), and find out etc. Additionally, "determine" can comprise receiving (e.g., receiving information), accessing (e.g., accessing data in the memory) and the like. Moreover, "determine" can comprise parsing, choice, selecting and establishing etc.

As used herein, the term "circuit" represents one or more of: (a) implementations of hardware circuit only (e.g., implementations of analog and/or digital circuit alone); and (b) combinations of hardware circuit and software, for example (if applicable): (i) combinations of analog and/or digital hardware circuit and software/firmware, and (ii) any part(s) of a hardware processor and software (including digital signal processors, software and memories operating in combination to enable apparatuses like optical communication apparatus or other computing devices etc. to implement various functions); and (c) hardware circuit and/or processor, for example, a microprocessor or a part thereof, which requires software (such as firmware) for operation, but is free of software when there is no operation for it.

The definition of circuit system is applicable to all scenarios whenever it is used in the present application (including any claims). As a further example, the term "circuit system" as used herein also covers implementations of hardware circuit or processor (or a plurality of processors) or hardware circuit or processor and part of (their) attached software and/or firmware only. The term "circuit system", if applicable to specific claim elements, also include, for example, baseband integrated circuit or processor integrated circuit for communication devices, or similar integrated circuits within servers, communication devices or other computing or network devices.

"Passive optical network" or "PON" used herein indicates that the included Optical Distribution Network (ODN) consists of passive devices, such as optical splitters and optic fibers etc., without active devices.

The term "neural network" used herein may be interpreted as machine leaning model, which can learn from the training data about associations between corresponding inputs and outputs, to process given inputs based on parameter value sets obtained from training after the training is completed and generate corresponding outputs. "Neural network" sometimes may also be referred to as "neural network model", "learning network", "learning model", "network" or "model" etc. These terms may be used interchangeably in the text.

As used herein, the terms "special activation function", "special AF", and "SAF" indicate an activation function/AF generated based on configuration parameters in accordance with various embodiments of the present disclosure.

As discussed above, equalization techniques based on the neural network have been proposed. However, traditional neural networks with medium size could not satisfy the needs of various types of high speed access networks (e.g., flexible PON supporting ONU classifying/grouping). In addition, the Bit Error Rate (BER) of the conventional neural network with medium size could not meet the bit error rate threshold of the high speed access network. Accordingly, it will be further discussed how the neural network based equalizer is designed to adapt to demands of various types of high speed access networks while the scale of the neural network is controlled within a reasonable range.

In accordance with various embodiments of the present disclosure, there is provided a method for communications. In the method, a second communication device (such as OLT or network device) determines to send to a first communication device (e.g., ONU or terminal device) configuration parameters to be used by the first communication device for setting up an equalizer at the first communication device, wherein the configuration parameters indicate one of a plurality of activation function classes for configuring the equalizer. The first communication device configures the equalizer at the first communication device with the configuration parameters. In this way, the neural network based equalizer can better adapt to the high speed access networks (especially flexible PON supporting ONU classifying/grouping). Moreover, the first communication device can implement the multilevel neural network based equalizer based on the configuration parameters that indicate the activation function class. Therefore, system performance (including mean squared error (MSE), bit error rate and the like) may be further boosted and the scale of the neural network is effectively downsized.

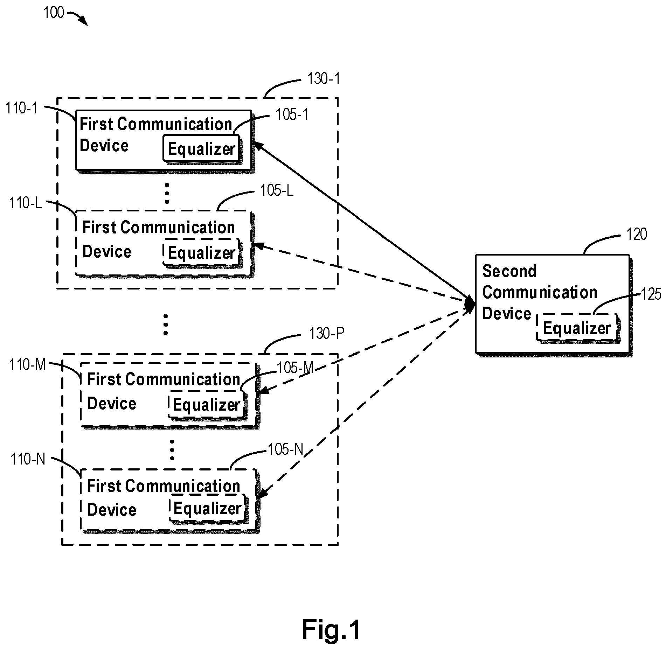

Fig. 1 illustrates an example environment 100 in which embodiments according to the present disclosure may be implemented. The environment 100 includes a first communication device 110-1, ..., 110-L, ..., 110-M, ..., 110-N (collectively known as "first communication device 110"), where L, M and N represent positive integers. The environment 100 also includes a second communication device 120. The first communication device 110 and the second communication device 120 communicate with each other via one or more communication links/channels.

Furthermore, equalizers 105-1, ..., 105-L, ...,105-M, ..., 105-N (collectively known as equalizer 105) are separately configured at the first communication devices 110-1, ... 110-L, ..., 110-M, ..., 110-N for processing data from the second communication device 120 (sometimes referred to as "downlink transmission" or "downlink data"). Alternatively or additionally, (one or more) equalizers 125 may be configured at the second communication device 120 to process data from the first communication device 110 (sometimes referred to as "uplink transmission" or "uplink data").

Moreover, in some example embodiments, the equalizer 105 or equalizer 125 is based on the neural network (e.g., fully connected neural network (FCNN)). In some example embodiments, a complex-valued multilevel AF based FCNN may be applied to the equalizer 105 or equalizer 125. In this way, the performance superiority of the neural network based equalizer over the conventional algorithms can be attributed to numerous factors, including non-linear activation function, depth of the neural network structure and input data features etc.

The environment 100 may be various communication systems. As an example, the environment 100 may be "wireless communication network". In the present disclosure, the term "wireless communication network" refers to a network in compliance with any suitable wireless communication standards, such as New Radio (NR), Long Term Evolution (LTE), LTE-Advanced (LTE-A), Wideband Code Division Multiple Access (WCDMA) and High Speed Packet Access (HSPA) etc. "Wireless communication network" also may be known as "wireless communication system". Besides, communications between the network devices, between the network devices and the terminal devices, or between terminal devices in the wireless communication network may be executed according to any suitable communication protocols, including but not limited to, Global System for Mobile Communications (GSM), Universal Mobile Telecommunications System (UMTS), Long Term Evolution (LTE), New Radio (NR), Wireless Local Area Network (WLAN) standards (e.g., IEEE 802.11 standard) and/or any other suitable wireless communication protocols currently known or to be developed.

When the environment 100 is a wireless communication network, the first communication device 110 may be "terminal device" and the second communication device 120 may be "network device"/"network node". Moreover, a variety of modulation modes, such as binary phase shift keying (BPSK), quadrature phase shift keying (QPSK), 16 quadrature amplitude modulation (16-QAM) or modulation formats of higher order, may be applied in the environment 100.

In the present disclosure, the term "terminal device" refers to any terminal devices that can perform wireless communications. As an example rather than a limitation, the terminal device also may be known as communication device, User Equipment (UE), Subscriber Station (SS), portable subscriber station, Mobile Station (MS) or Access Terminal (AT). The terminal device may include, but not limited to, mobile phone, cellular phone, smartphone, Voice over IP (VoIP) phone, wireless local loop phone, tablet computer, wearable terminal device, Personal Digital Assistant (PDA), portable computer, desktop computer, image capture terminal device (such as digital camera, gaming terminal device, music storage and play device, on-board wireless terminal device, wireless endpoint, mobile station, Laptop Embedded Equipment (LEE), Laptop Mounting Equipment (LME), USB dongle, intelligent device, wireless Customer Premises Equipment (CPE) and the like. In the following description, the terms "terminal device", "communication device", "terminal", "user equipment" and "UE" may be used interchangeably. Besides, in a scenario of Internet of Things (IOT), the terminal device may represent machine or other devices, which machine or other devices execute monitoring and/or measurements and transmit results of the monitoring and/or measurements to another terminal device and/or network device. In such case, the terminal device may be a Machine-to-Machine (M2M) device, which may be referred to as Machine Type Communication (MTC) device in the context of 3GPP. As a specific example, the terminal device may be UE that implements 3GPP Narrow Band Internet of Things (NB-IoT) starndard. Examples of such machine or device may be sensor, metering device (e.g., power meter), industrial machinery, or domestic or personal electrical appliance, such as refrigerator, TV, personal wearable device (like watch) and the like. In other scenarios, the terminal device may indicate vehicle or other devices that can monitor/report their operating states or other functions related to their operations.

In the present disclosure, the term "network node" or "network device" indicates nodes within wireless communication networks, through which nodes the terminal devices access the network and receive services therefrom. Depending on the applied terms and technology, the network device may refer to Base Station (BS) or Access Point (AP), such as node B (NodeB or NB), Evolved NodeB (eNodeB or eNB), NR NB (also known as gNB), Remote Radio Unit (RRU), Radio Header (RH), Remote Radio Header (RRH), relay, low power node (e.g., femto-, pico- and the like).

As a further example, the environment 100 may be optical communication networks (such as Passive Optical Network PON). In the event that the environment 100 is an optical communication network, the first communication device 110 may be ONU and the second communication device 120 may be OLT.

In recent years, much progress has been made in the standardization of single-wavelength 50-Gb/s passive optical network (50G-PON) by the International Telecommunication Union Telecommunication Standardization Sector (ITU-T). Many modulation techniques, e.g., Non Return Zero (NRZ), PAM4 format and PAM8 format, have been considered for application to the PON. In addition, it is proposed in the flexible PON a scheme of classifying/grouping ONU via flexible modulation (flex mod) and flexible FEC (flex code). Two equalization schemes, including feed-forward equalization (FFE) and decision feedback equalization (DFE), have been put forward.

In some example embodiments, the first communication device 110 can be grouped using different modulation modes (such as NRZ, PAM4 and PAM8 etc.) based on the available channel conditions (such as signal-to-noise ratio SNR, signal to interference plus noise ratio, received signal strength indicator RSSI, and transmission rate etc.).

In the specific embodiment shown by Fig. 1, N first communication devices 110 are allocated to P classes (sometimes also known as "group") of first communication devices 130-1, ..., 130-P, where P is a positive integer and P is less than or equal to M. In some embodiments, different first communication device classes may correspond to respective modulation modes. For example, a first class of the first communication device 110 corresponds to PAM4; a second class of the first communication device 110 corresponds to PAM8; and a third class of the first communication device 110 corresponds to NRZ etc. In the specific embodiment of Fig. 1, first communication devices 110-1, ..., 110-L belong to the first communication device class 130-1, and first communication devices 110-M, ..., 110-N belong to the first communication class 130-P.

It should be appreciated that the number of the first communication device 110, the equalizer 105, the equalizer 125 and the second network device 120 and the connections therebetween are provided above merely for the purpose of illustration and should not be considered as restrictions. The environment 100 may include any suitable numbers of the first communication device 110, the equalizer 105, the equalizer 125 and the second network device 120 appropriate for fulfilling the embodiments of the present disclosure.

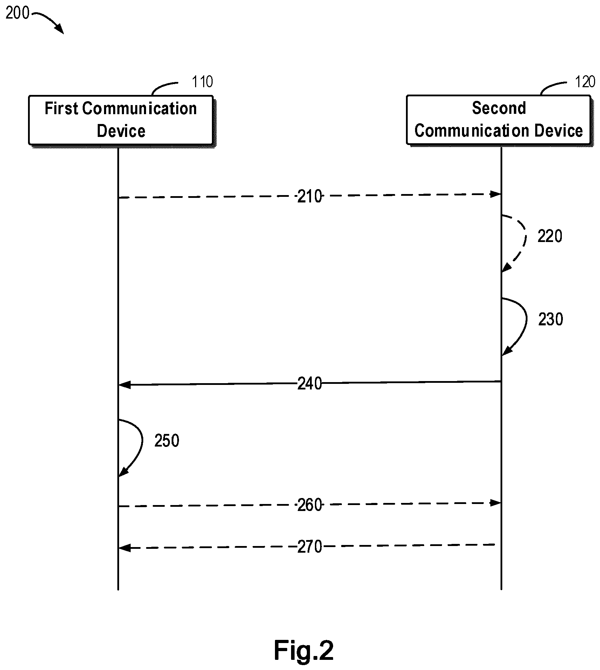

Principles and implementations of the present disclosure are to be described in details below with reference to Figs. 2-12.

It is to be understood that in some example embodiments, the single output of the FCNN/the two parallel outputs of the FCNN are discussed as examples. However, various example embodiments of the present disclosure may be applied to other types of neural networks, including but not limited to, Recurrent Neural Network (RNN), Convolutional Neural Network (CNN) and the like, and the neural network may include any networks (such as any numbers of input layers, hidden layers and output layers).

It also should be appreciated that the equalizer 105 configured at the first communication device 110 is discussed in some example embodiments as an example. However, various example embodiments of the present disclosure may also apply to the equalizer 125 at the second communication device 120. In other words, all discussion related to the first communication device 110 in the present disclosure also applies to the second communication device 120 unless clearly indicated otherwise. Likewise, all discussions concerned with the second device 120 also apply to the first communication device 110.

Furthermore, the training of the neural network may be done at either the first communication device 110 or the second communication device 120. The present disclosure is not restricted in this regard.

First of all, Fig. 2 illustrates an interaction procedure 200 in accordance with some embodiments of the present disclosure. The interaction procedure 200 will be described with reference to Fig. 1 for discussion purpose. The interaction procedure 200 involves the first communication device 110 and the second communication device 120. In the specific embodiment of Fig. 2, the first communication device 110 is provided with the equalizer 105.

In some example embodiments, the second communication device 120 determines 230 the configuration parameters that are to be used by the first communication device 110 for setting up the equalizer 105 at the first communication device 110, wherein the configuration parameters indicate one of a plurality of activation function classes for configuring the equalizer 105.

As a specific embodiment, a plurality of activation function classes may be: a first class corresponding to PAM4 (briefly denoted as Special AF 4 or "SAF4"), a second class corresponding to PAM8 (briefly denoted as Special AF 8 or "SAF 8"), and a third class corresponding to NRZ (briefly denoted as "tanh").

Additionally, in some example embodiments, the second communication device 120 may determine the configuration parameters based on information of channel conditions between the first communication device 110 and the second communication device 120. Specifically, the second communication device 120 receives 210 from the first communication device 110 the information indicating the channel conditions between the first communication device 110 and the second communication device 120. Next, the second communication device 120 determines the configuration parameters based on the received information of the channel conditions.

In some example embodiments, when the channel conditions between the first communication device 110 and the second communication device 120 are indicated as good, the second communication device 120 may determine an activation function class of the first communication device 110 as first class corresponding to the PAM4/the second class corresponding to the PAM8 (for example, when the SNR is higher than the first threshold, it is determined that the activation function class of the first communication device 110 is the second class corresponding to the PAM8; when the SNR is higher than the second threshold and lower than the first threshold, it is determined that the activation function class of the first communication device 110 is the first class corresponding to PAM4). On the contrary, if the channel conditions between the first communication device 110 and the second communication device 120 are indicated as relatively poor, it is determined that the activation function class of the first communication device 110 is the third class corresponding to NRZ

Moreover, channel condition may be indicated by a plurality of parameters. An example of the channel condition is SNR Other examples of the channel conditions may be, for example, SNIR, RSSI and transmission rate.

In addition, the channel condition may be reported at multiple timing and the present disclosure is not restricted in this regard. For example, when the environment 100 is an optical communication network, the first communication device 110 (such as ONU) reports to the second communication device 120 (e.g., OLT) the channel conditions every time the first communication device is powered on. In another example where the environment 100 is a wireless communication network, the first communication device 110 (such as terminal device) triggers the report of the channel conditions every time it is powered on, or periodically or subsequent to monitoring a predetermined event.

Alternatively or additionally, in some example embodiments, the second communication device 120 may determine the corresponding activation function class based on the class of the first communication device. Additionally, in some example embodiments, the class of the first communication device 110 is associated with a modulation scheme to be used by the first communication device 110 as configured by the second communication device 120. As a specific embodiment, the first communication device 110 may be divided into a plurality of classes/groups corresponding to different modulation modes, e.g., a first group corresponding to PAM4 (briefly denoted as G1=PAM4), a second group corresponding to PAM8 (briefly denoted as G2=PAM8) and a third group corresponding to NRZ (briefly denoted as G3=NRZ).

In such case, when the second communication device 120 determines that the class/group of the first communication device corresponds to PAM4 (i.e., G1=PAM4), it is respectively determined that the activation function class of the first communication device 110 is the first class corresponding to PAM4. Similarly, when the second communication device 120 determines that the class/group of the first communication device 110 corresponds to PAM8 (i.e., G2=PAM8), it is respectively determined that the activation function class of the first communication device 110 is the second class corresponding to PAM8; and when the second communication device 120 determines that the class/group of the first communication device 110 corresponds to NRZ (i.e., G3=NRZ), it is respectively determined that the activation function class of the first communication device 110 is the third class corresponding to NRZ

Additionally, in some example embodiments, the second communication device 120 may determine the class of the first communication device 110 based on the information of the channel conditions between the first communication device 110 and the second communication device 120. Specifically, the second communication device 120 receives 210 from the first communication device 110 the information indicating the channel conditions between the first communication device 110 and the second communication device 120. Afterwards, the second communication device 120 determines, based on the received information of the channel conditions, the class of the first communication device 110.

In some example embodiments, when the channel conditions between the first communication device 110 and the second communication device 120 are indicated as good, the second communication device 120 may determine the class of the first communication device 110 as the first class corresponding to PAM4/the second class corresponding to PAM8 (e.g., when the SNR is higher than the first threshold, the class of the first communication device 110 is determined as the second class corresponding to PAM8; when the SNR is higher than the second threshold and lower than the first threshold, the class of the first communication device 110 is determined as the first class corresponding to PAM4). On the contrary, if the channel conditions between the first communication device 110 and the second communication device 120 are indicated as relatively poor, the class of the first communication device 110 is determined as the third class corresponding to NRZ. It should be understood that the second communication device 120 may further determine the configuration parameters based on the determined class after determining the class of the first communication device 110 according to the channel conditions. The operation of determining the configuration parameters based on the determined class has been previously discussed and will not be repeated here.

In the present disclosure, the second communication device 120 may express the configuration parameters in various ways, so as to indicate the determined activation function class to the first communication device 110.

In some example embodiments, the second communication device 120 may implicitly indicate the determined configuration parameters to the first communication device 110 based on the corresponding relation between the class of the first communication device 110 and the activation function class. As a specific embodiment, the first, second and third class of the first communication device 110 respectively corresponds to the first, second and third class of the activation function. Under these circumstances, the second communication device 120 may send to the first communication device 110 a first indication indicating the class of the first communication device 110. The determined configuration parameters are implicitly indicated to the first communication device 110 via the first indication.

Alternatively, in a further example embodiment, the configuration parameter is a newly defined parameter (which for example may be denoted as SAF type). In such case, the second communication device 120 indicates the determined configuration parameter to the first communication device 110 via a second indication indicating the one activation function class among the plurality of activation function classes. As an example embodiment, when the environment 100 is an optical communication network supporting ONU grouping, the OLT may generate a newly defined activation function class SAF type and include it in the grouping parameter (which may be denoted as G_param) for transmission to the first communication device 110.

Subsequently, the second communication device 120 sends 240 to the first communication device 110 the determined configuration parameters. Correspondingly, the first communication device 110 configures 250 the equalizer 105 using the configuration parameters. As an example embodiment, the first communication device 110 determines, based on the activation function class indicated by the configuration parameters, the activation function for configuring the equalizer 105, and configures the neural network based equalizer 105 using the determined activation function, so as to generate the multilevel neural network based equalizer 105.

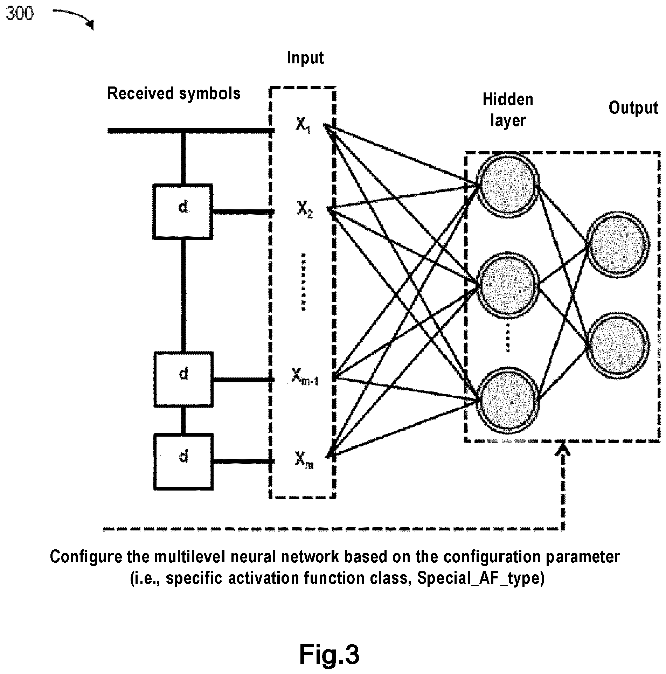

Next, an example block diagram 300 of configuring the multilevel neural network based equalizer 105 in accordance with example embodiments of the present disclosure is described with reference to Fig. 3. As shown in Fig.3, the neural network includes an input layer, at least one hidden layer and an output layer. Upon receiving the allocated configuration parameters (such as SAF type) from the second communication device 120, the first communication device 110 may configure the equalizer 105 with the configuration parameters, such that the neurons within the hidden layer and the output layer may have a particular AF corresponding to the configuration parameters. In this way, the multilevel neural network based equalizer 105 is implemented.

Continuing to refer to Fig. 2, additionally, in some example embodiments, after completing the configuration of the equalizer 105, the first communication device 110 may send an indication message to the second communication device 120 and subsequently receive the data transmitted 270 from the second communication device 120. The first communication device 110 may process the received data using the multilevel neural network based equalizer 105 configured with the configuration parameters, so as to boost the communication system performance. For example, the first communication device 110 may send a "Ready" indication to the second communication device 120. The second communication device 120 transmits data to the first communication device 110 after receiving the "Ready" indication.

In some example embodiments, the neural network may be trained at the side of the second communication device 120, and the trained parameters (e.g., weight) and configuration parameters (such as SAF type) are then transmitted/allocated to a specific first communication device 110. The equalization is finally completed at the first communication device 110. Alternatively, in some other example embodiments, the neural network may be trained at the side of the first communication device 110. Specifically, the first communication device 110 trains the neural network based on the allocated SAF type and then completes the equalization.

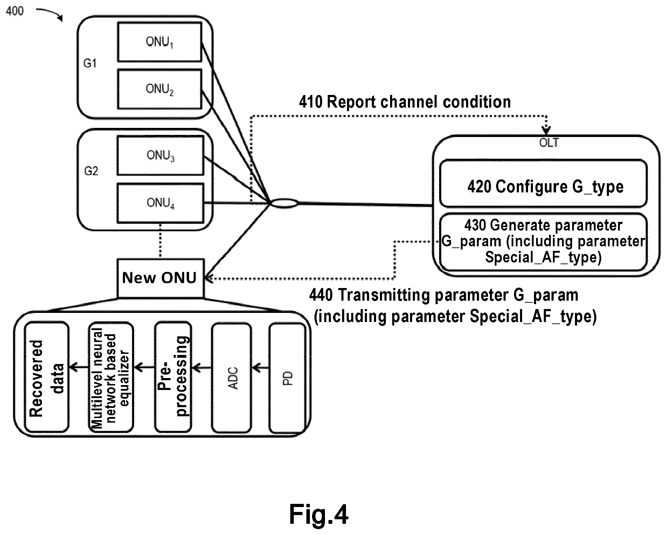

To better describe the above process of configuring the equalizer in accordance with the present disclosure, a specific embodiment of the present disclosure is now depicted with reference to Fig. 4, which illustrates an example interaction procedure 400 in accordance with embodiments of the present disclosure. In the specific embodiment of Fig. 4, the ONU in the PON network that supports grouping is divided into two classes/groups (i.e., G1 and G2, where G1=PAM4 and G2=NRZ). The OLT continuously monitors the state of the ONU When a new ONU (corresponding to the first communication device 110) is powered on and gets ready for joining the PON, the new ONU obtains the channel conditions (such as SNR, SNIR, RSSI and transmission rate etc.) by measuring preamble signals among other operations. The new ONU reports 410 the measured channel conditions to the OLT (corresponding to the second communication device 120). The OLT first determines whether the new ONU has been divided into the corresponding class (e.g., G1 or G2). Specifically, the OLT may determine whether the new ONU has been divided into the corresponding class based on whether the new ONU has been configured with the parameter G-type. If the OLT determines that the new ONU has not been divided into the corresponding class, the OLT will divide 420 the new ONU to the corresponding class based on the received channel conditions. For example, when the channel conditions are good, the new ONU is divided into G1; conversely, if the channel conditions are relatively poor, the new ONU is divided into G2.

Then, the OLT generates the configuration parameters based on the determined new OUN Specifically, the OLT generates 430 the parameter G_param, which includes a newly defined configuration parameter (i.e., activation function class, Special AFtype). The OLT transmits 440 the parameter G_param (including parameter Special AFtype) to the new ONU The new ONU may generate, based on the parameter Special AFtype, a specific AF to configure the equalizer, thereby generating the multilevel neural network based equalizer.

The new ONU may subsequently exchange data with the OLT based on the configured multilevel neural network based equalizer. In the example embodiment of Fig. 4, after the data are received from the OLT, the data are subject to photoelectric conversion (via photodiode, PD), digital-to-analog conversion (via Analog to Digital Converter, ADC), pre-processing module and equalization (via the configured/generated multilevel neural network based equalizer) to obtain the recovered data.

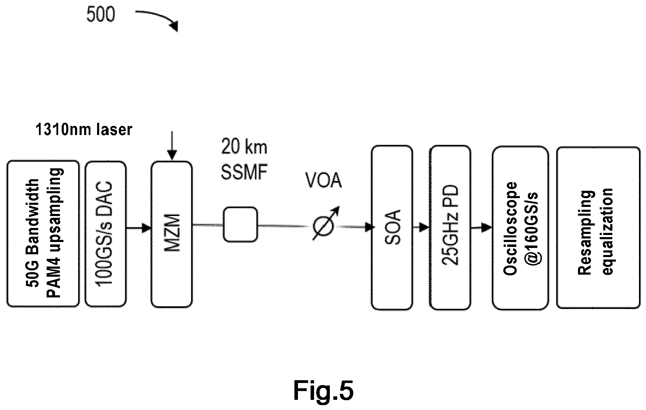

Reference will be drawn from Figs. 5-10B below. By comparison of the test results, it is indicated that the various embodiments according to the present disclosure can achieve better communication performance (e.g., lower mean square error and lower bit error rate BER etc.).

Fig. 5 illustrates an example test environment 500 in accordance with embodiments of the present disclosure. The test environment 500 corresponds to 100Gbps/$\lambda$ PAM4-based (Intensity Modulation and Direct Detection IMDD) PON.

In the test environment shown by Fig. 5, the ONU is connected to the OLT via a 20-km standard single mode fiber (SSMF). At the OLT side, a 1310 nm distributed feedback (DFB) laser is input to sample the data to be transmitted over a 50G bandwidth. Afterwards, the data are subject to the digital-to-analog conversion, processed by Mach-Zehnder Modulator (MZM) and subsequently sent to the ONU side. After 20km SSMF transmission, a variable optical attenuator (VOA) is applied for receiver sensitivity measurement. The received signal is directly detected by a 25GHz photodiode (PD) after being processed by a Semiconductor Optical Amplifier (SOA). The detected signal is then sampled by a digital sample oscilloscope (DSO) with 59GHz bandwidth and 160GSa/s sample rate. Finally, the sampled signals are processed offline. Offline processing includes resampling to 50GSa/s and multilevel NN-based equalizer training proposed in the present disclosure.

As a specific embodiment, the configuration parameter corresponds to the first class of the activation function (i.e., corresponding to PAM4) in the test environment. In such case, the specific AF may be obtained via the following equations (1) and (2).

$$level \; = \; \begin{cases} -1 & if \; x \le -0.25, c2 = \dfrac{1+e^{-c1}}{1-e^{-c1}} \\ 0 & if \; -0.25 < x \le 0.25 \\ 1 & if \; x > 0.25 \end{cases} \tag{1}$$

$$SAF(x) \; = \; \frac{2c2}{1+e^{-c1(x-2level)}} - c2 + 2level \tag{2}$$

Where c1 indicates a gradient factor, c2 is an intermediate parameter and SAF represents the calculated specific AF.

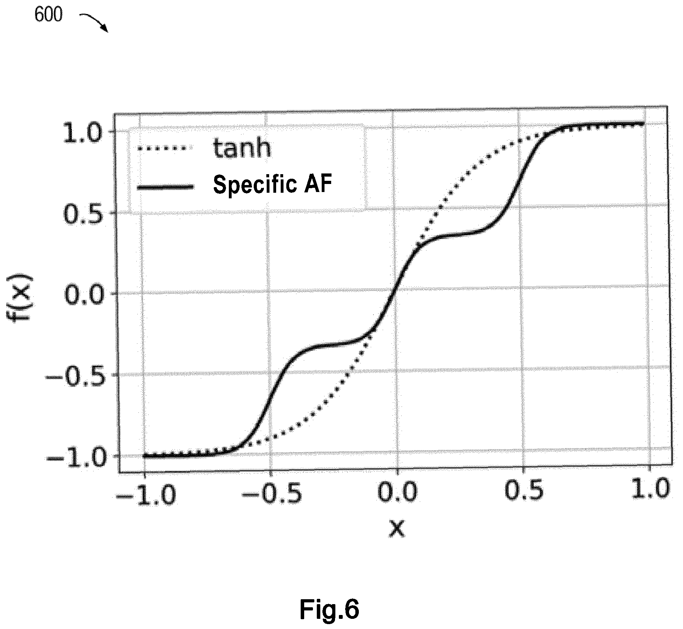

Fig. 6 illustrates a comparison curve 600 between the function curve of the specific AF in accordance with example embodiments of the present disclosure and the function curve of the traditional AF. As shown in Fig.6, the specific AF has four saturation regions, which may optimize the performance of the FCNN-based equalizer.

It should be appreciated that equations (1) and (2) and the specific AF illustrated in Fig. 6 are merely specific implementations of the present disclosure. In view of the actual needs, other specific AFs corresponding to different configuration parameters (such as PAM4 or PAM8) may be designed to implement the configuration of the multilevel neural network based equalizer.

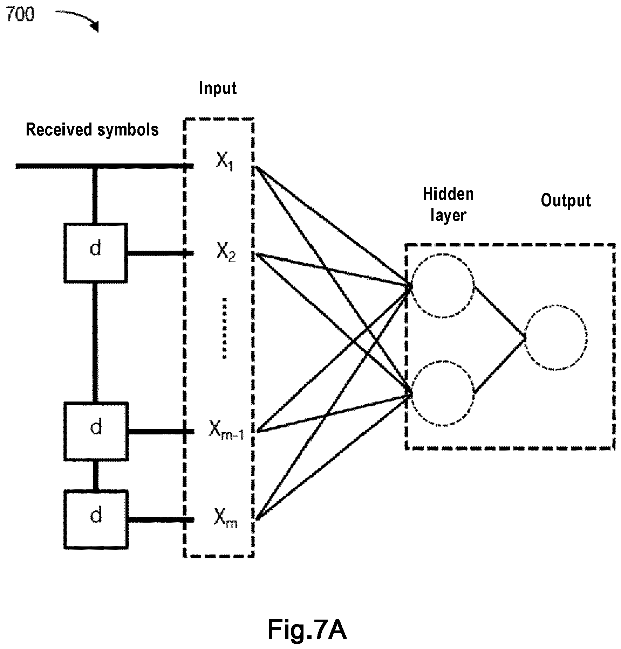

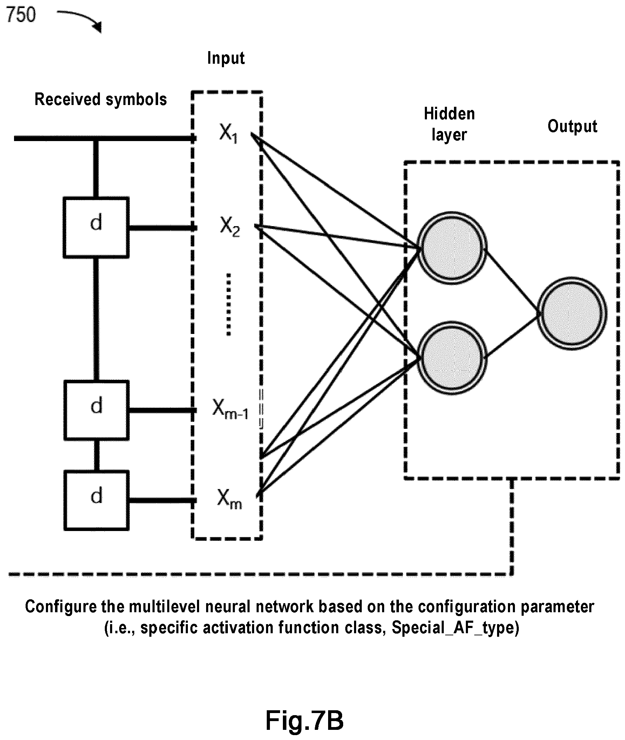

Fig. 7A illustrates an example block diagram 700 of a traditional neural network based equalizer with single output and Fig. 7B illustrates an example block diagram 750 of a multilevel neural network based equalizer with single output in accordance with example embodiments of the present disclosure. In the example embodiments of Figs. 7A and 7B, the neural network has one output layer, one hidden layer and one output layer, wherein the input number of the input layer is 17, and the neuron numbers of the hidden layer and the output layer respectively are 2 and 1, briefly denoted as [17i, (2, 1)].

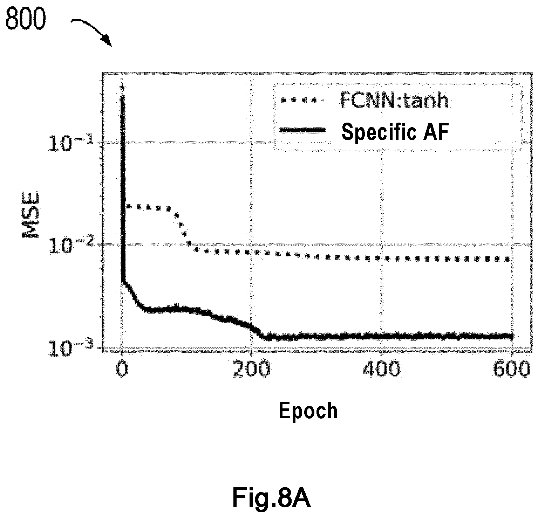

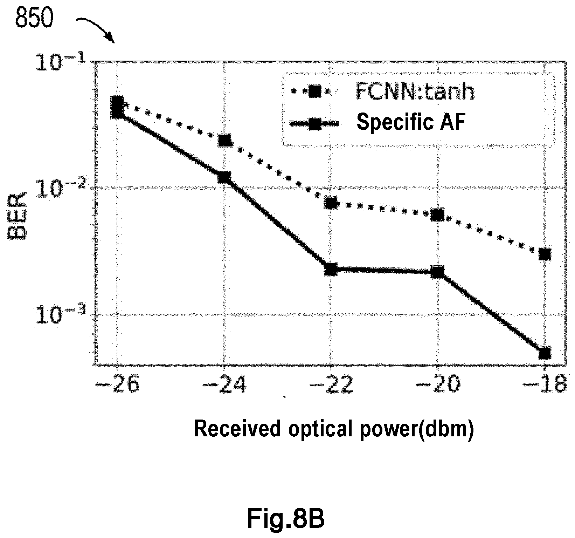

Figs. 8A and 8B respectively illustrate performance comparison curves 800 and 850 under the application scenario of the single-output neural network (i.e., [17i, (2, 1)]). According to Fig. 8A, the equalizer configured with the specific AF in accordance with the present disclosure may achieve better MSE at the same Epoch. Likewise, the equalizer configured with the specific AF in accordance with the present disclosure may achieve a lower bit error rate under the same received optical power as shown in Fig. 8B.

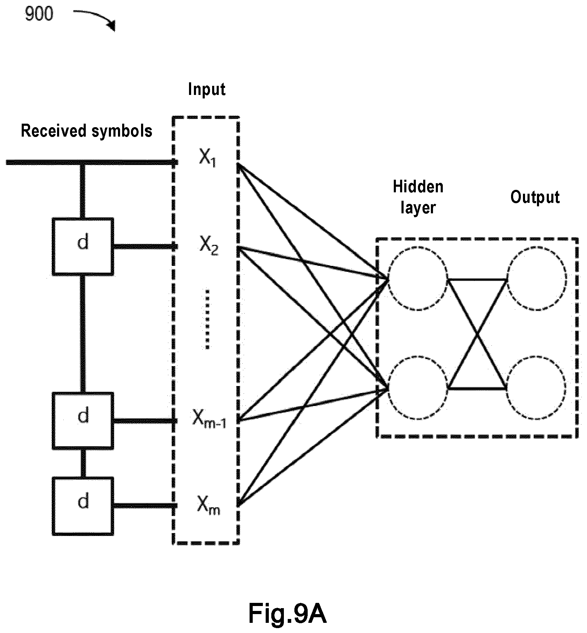

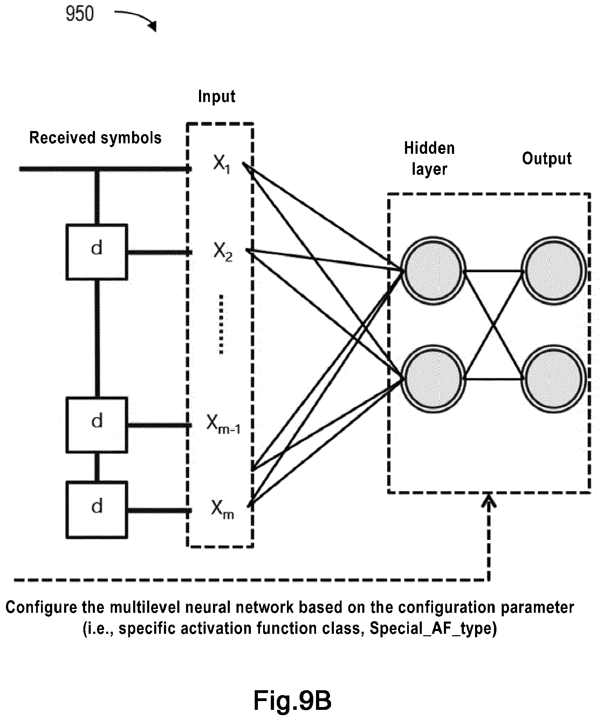

Fig. 9A illustrates an example block diagram 900 of a traditional equalizer of a neural network with two parallel outputs and Fig. 9B illustrates an example block diagram 950 of the multilevel neural network based equalizer with parallel outputs in accordance with specific embodiments of the present disclosure. In the example embodiments of Figs. 9A and 9B, the neural network has one input layer, one hidden layer and one output layer (having two parallel outputs), wherein the input number of the input layer is 18, and the neuron numbers of the hidden layer and the output layer respectively are 2 and 8, briefly denoted as [18i, (2, 2)].

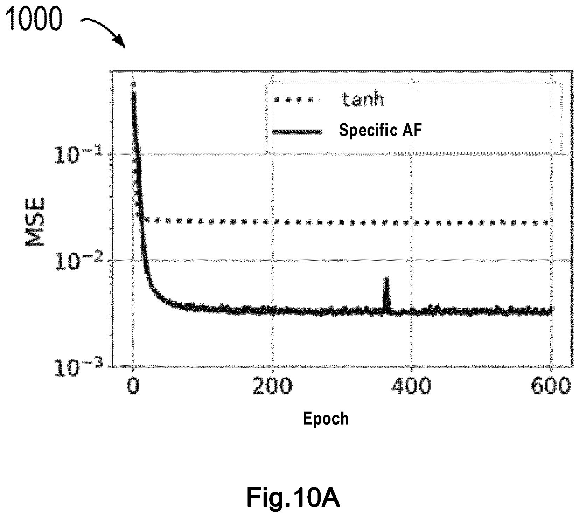

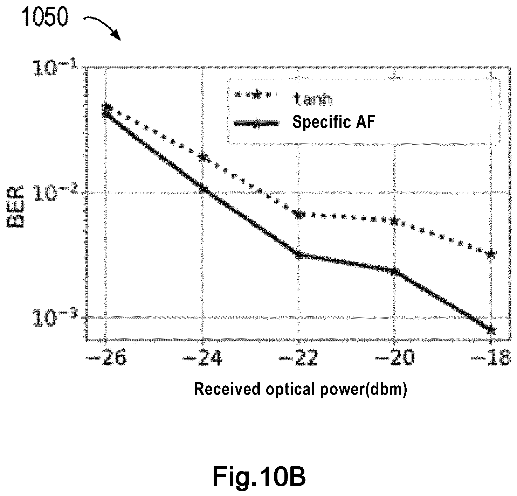

Figs. 10A and 10B separately illustrate performance comparison curves 1000 and 1050 under the application scenario of the parallel-output neural network (i.e., [18i, (2, 2)]). According to Fig. 10A, the equalizer configured with the specific AF in accordance with the present disclosure may achieve better MSE at the same Epoch. Likewise, the equalizer configured with the specific AF in accordance with the present disclosure may achieve a lower bit error rate under the same received optical power as shown in Fig. 10B.

Accordingly, in the present disclosure, the output value may be deeply constrained within a specific saturation region and the accumulation of error is alleviated due to the use of the multilevel (4-level) specific AF. Thus, compared to the traditional two-level AF (i.e., tanh), the present disclosure can fulfill better performance.

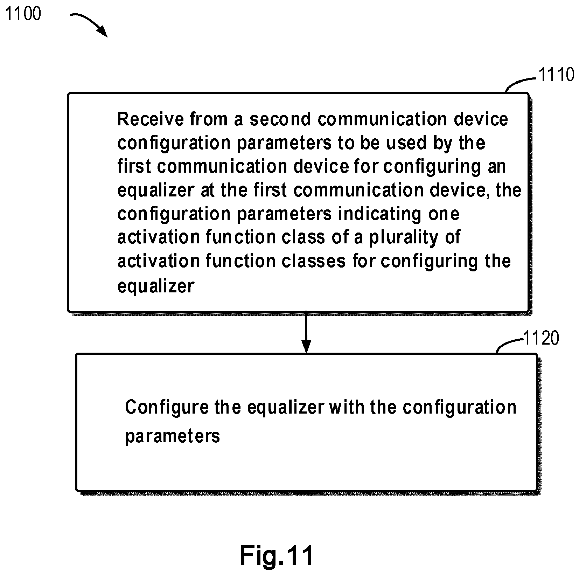

Fig. 11 illustrates a flowchart of a method implemented at the first communication device 110 in accordance with embodiments of the present disclosure. For the sake of discussion, the method 1100 will be described with reference to Fig. 1.

As shown in Fig. 11, at block 1110, the first communication device 110 receives from the second communication device 120 the configuration parameters to be used by the first communication device 110 for configuring the equalizer 105 at the first communication device 110, wherein the configuration parameters indicate one activation function class of a plurality of activation function classes for configuring the equalizer 105.

At block 1120, the first communication device 110 configures the equalizer 105 with the configuration parameters.

In some example embodiments, the configuration parameter is at least one of: a first indication indicating the class of the first communication device 110, and a second indication indicating the one activation function class of the plurality of activation function classes.

In some example embodiments, the class of the first communication device 110 is associated with the modulation scheme to be used by the first communication device 110 as configured by the second communication device 120.

In some example embodiments, the first communication device 110 sends to the second communication device 120 the information indicating the channel conditions between the first communication device 110 and the second communication device 120.

In some example embodiments, the information of the channel conditions includes at least one of: signal to noise ratio, signal to interference plus noise ratio, intensity indicator of the received signal and the transmission rate.

In some example embodiments, the equalizer 105 is based on the neural network and the first communication device 110 determines, based on the one activation function class indicated by the configuration parameter, an activation function for configuring the equalizer 105. Besides, the first communication device 110 configures the neural network based equalizer 105 using the determined activation function, to generate a multilevel neural network based equalizer 105.

In some example embodiments, the first communication device 110 is an optical network unit, while the second communication device 120 is an optical line terminal; alternatively, the first communication device 110 is a user equipment, while the second communication device 120 is a network device.

In some example embodiments, the device that can execute the method 1100 (e.g., implemented at the first communication device 110) may include apparatuses for carrying out each step of the method 1100. The apparatus may be fulfilled in any suitable forms. For example, the apparatus may be fulfilled in circuit or software module.

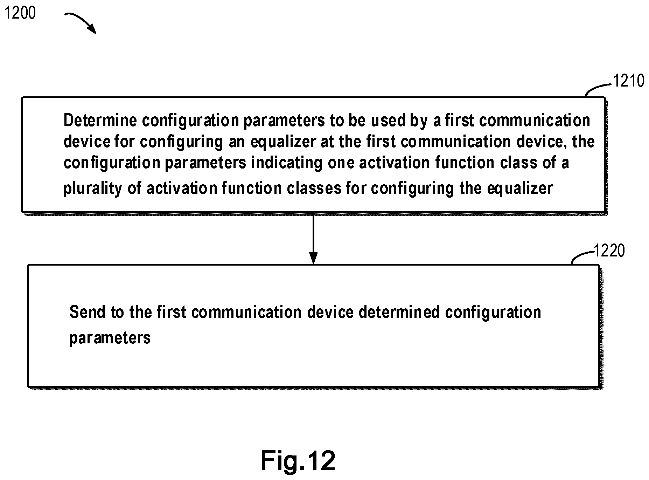

Fig. 12 illustrates a flowchart of a method implemented at the second communication device 120 as shown in Fig. 1 in accordance with embodiments of the present disclosure.

As shown, at block 1210, the second communication device 120 determines the configuration parameters to be used by the first communication device 110 for configuring the equalizer 105 at the first communication device 110, wherein the configuration parameters indicate one activation function class of a plurality of activation function classes for configuring the equalizer 105.

At block 1220, the second communication device 120 sends to the first communication device 110 the determined configuration parameters.

In some example embodiments, the configuration parameter is at least one of: a first indication indicating the class of the first communication device 110, and a second indication indicating the one activation function class of the plurality of activation function classes.

In some example embodiments, the class of the first communication device 110 is associated with the modulation scheme to be used by the first communication device 110 as configured by the second communication device 120.

In some example embodiments, the second communication device 120 receives from the first communication device 110 the information indicating the channel conditions between the first communication device 110 and the second communication device 120; and determines, based on the received information of the channel conditions, the configuration parameters to be used by the first communication device 110 for configuring the equalizer 105 at the first communication device 110.

In some example embodiments, the second communication device 120 determines, based on the received information of the channel conditions, the class of the first communication device 110; and determines, based on the determined class of the first communication device 110, the configuration parameters to be used by the first communication device 110 for configuring the activation function of the equalizer 105 at the first communication device 110.

In some example embodiments, the information of the channel conditions includes at least one of: signal to noise ratio, signal to interference plus noise ratio, intensity indicator of the received signal and the transmission rate.

In some example embodiments, the first communication device 110 is an optical network unit, while the second communication device 120 is an optical line terminal; alternatively, the first communication device 110 is a user equipment, while the second communication device 120 is a network device.

In some example embodiments, the device that can execute the method 1100 (e.g., implemented at the first communication device 110) may include apparatuses for carrying out each step of the method 1100. The apparatus may be fulfilled in any suitable forms. For example, the apparatus may be fulfilled in circuit or software module.

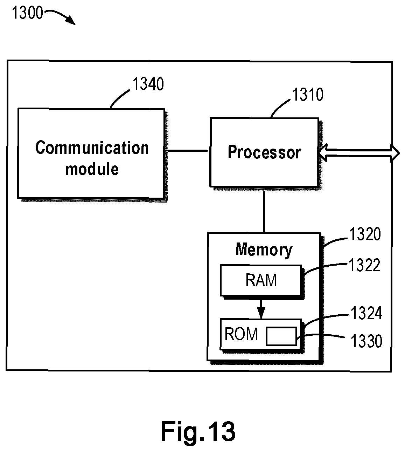

Fig. 13 is a simplified block diagram of a device 1300 suitable for implementing the embodiments of the present disclosure. The device 1300 may be implemented as the communication device, e.g., the first communication device 110 and the second communication device 120 as shown by Fig. 1. As illustrated, the device 1300 includes one or more processors 1310, one or more memories 1320 coupled to the processors 1310, and one or more communication modules 1340 (e.g., including one or more transmitter and/or receiver (TX/RX)) coupled to the processor 1310.

The communication module 1340 is used for two way communications. The communication module 1340 has at least one communication interface to facilitate communications. The communication interface may represent any interfaces required for communication with other network elements.

The processor 1310 may be of any types suitable for local technology network, including but not limited to, one or more of general-purpose computer, dedicated computer, microcontroller, Digital Signal Controller (DSP) and controller-based multi-core controller architecture. The device 1300 may include a plurality of processors, e.g., dedicated integrated circuit chip, which is subordinate to a clock synchronized with the main processor.

The memory 1320 may include one or more non-volatile memories and one or more volatile memories. Examples of the non-volatile memory include, but not limited to, Read-Only Memory (ROM) 1324, Erasable Programmable Read-Only Memory (EPROM), flash, hard disk, Compact Disk (CD), Digital Video Disk (DVD) and other magnetic storage and/or optical storage. Examples of the volatile memory include, but not limited to, Random Access Memory (RAM) 1322 and other volatile memories that will not persist during power outage.

The computer program 1330 includes the computer-executable instructions executed by an associated processor 1310. The program 1330 may be stored in the ROM 1320. The processor 1310 may perform any suitable actions and processes by loading the program 1330 into the RAM 1320.

Embodiments of the present disclosure may be implemented with the aid of the program 1330, such that the device 1300 can execute any procedure of the present disclosure discussed with reference to Figs. 2-12. Embodiments of the present disclosure also may be implemented by hardware or software or combinations of hardware and software.

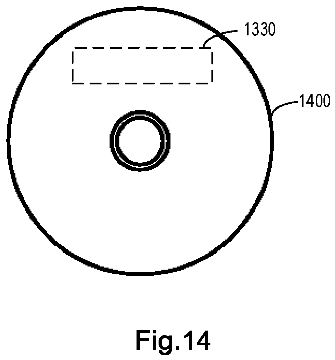

In some embodiments, the program 1330 may be tangibly included in the computer-readable medium, which computer-readable medium may be contained in the device 1300 (e.g., memory 1320) or other storage devices accessible by the device 1300. The program 1330 may be loaded from the computer-readable medium into the RAM 1322 for execution. The computer-readable medium may include any types of tangible non-volatile memory, e.g., ROM, EPROM, flash, hard disk, CD, DVD and the like. Fig. 14 illustrates an example of the computer-readable medium 1400 in the form of CD or DVD The computer-readable medium is stored thereon with a program 1430.

In general, various embodiments of the present disclosure may be implemented by hardware, dedicated circuits, software, logic or any combinations thereof. Some aspects may be implemented by hardware while others may be implemented by firmware or software executed by controllers, microprocessors or other computing devices. Although each aspect of embodiments of the present disclosure is illustrated and described as block diagram or flowchart or represented by some other figures, it should be understood that the block, apparatus, system, technology or method described here may be implemented as hardware, software, firmware, dedicated circuits, logic, general-purpose hardware, controller, or other computing devices, or any other combinations thereof as non-restrictive examples.

The present disclosure also provides at least one computer program product stored on the non-transitory computer-readable storage medium. The computer program product includes computer-executable instructions, for example, the instructions comprised in program modules and executed in devices on a target physical or virtual processor to perform the above methods 1100 and 1200 with reference to Figs. 11 and 12. In general, program modules comprise routines, programs, libraries, objects, classes, components, and data architecture that execute particular tasks or implement particular abstract data structure. In each embodiment, functions of the program modules may be merged or divided as required and the machine-executable instructions for program modules may be executed in local or distributed devices. In the distributed devices, program modules may be positioned either in local or remote storage medium.

The computer program codes for implementing method of the present disclosure may be written in one or more kinds of programming languages. The computer program codes may be provided to processors of the general-purpose computer, dedicated computer or other programmable data processing apparatuses, such that the program codes, when executed by the computer or other programmable data processing apparatuses, cause the implementation of functions/operations specified in the flowchart and/or block diagram. The program codes can be executed entirely on the computer, partially on the computer, as an independent software package, partially on the computer and partially on the remote computer or entirely on the remote computer or server.

In the context of the present disclosure, the computer program codes or related data may be carried by any suitable carriers, such that the device, apparatus or processor can perform the above described various procedures and operations. Examples of the carrier include signal, computer-readable medium and the like. Examples of the signals may include electrical, optical, radio, acoustic transmission signals or transmission signals in other forms, such as carrier wave and infrared signal etc.

The computer-readable medium may be any tangible medium containing or storing programs for or related to instruction execution systems, apparatuses, or devices. The computer-executable medium may be a computer-readable signal medium or a computer-readable storage medium. The computer-readable medium may include, but not limited to, electronic, magnetic, optical, electromagnetic, infrared or semiconductor system, apparatus or device, or any suitable combinations thereof. The more specific examples of the computer-readable storage medium comprise an electrical connection including one or more wires, a portable computer disk, a hard disk, a random-access memory (RAM), a read-only memory (ROM), an erasable programmable read-only memory (EPROM or flash), an optical storage device, a magnetic storage device, or any suitable combinations thereof.

Furthermore, although the operations of the method in accordance with the present disclosure are depicted in a particular order in the drawings, it does not require or suggest that the operations must be executed in the particular order, or all operations shown must be executed to obtain the expected result. On the contrary, the steps depicted in the flowcharts may be executed in a different order. Additionally or alternatively, some steps may be omitted; a plurality of steps may be combined into one step for execution; and/or one step may be split into a plurality of steps for execution. It should be noted that features and functions of two or more apparatuses in accordance with the present disclosure may be materialized in one apparatus. Conversely, the features and functions of one apparatus described above may be further divided and materialized by a plurality of apparatuses.

Although the present disclosure has been described with reference to several specific embodiments, it should be understood that the present disclosure is not limited to the disclosed specific embodiments. The present disclosure is intended to encompass various modifications and equivalent arrangements included within the spirit and the scope of the attached claims.

**Claims**

1. A first communication device (110), comprising:

   at least one processor; and
   at least one memory including computer program codes,
   wherein the at least one memory and the computer program codes are configured to, together with the at least one processor, enable the first communication device (110) to:

   receive from a second communication device configuration parameters to be used by the first communication device for configuring an equalizer at the first communication device (110), the configuration parameters indicating one activation function class of a plurality of activation function classes for configuring the equalizer; and
   configure the equalizer with the configuration parameters.

2. The first communication device (110) of claim 1, wherein the configuration parameters include at least one of:

   a first indication indicating a class of the first communication device; and
   a second indication indicating the one activation function class of the plurality of activation function classes
   , wherein for example a class of the first communication device is associated with a modulation scheme to be used by the first communication device as configured by the second communication device.

3. The first communication device (110) of claim 1, wherein the at least one memory and the computer program codes are also configured to, together with the at least one processor, enable the first communication device to:

   send to the second communication device information indicating channel conditions between the first communication device and the second communication device
   , wherein for example the information of channel conditions includes at least one of: signal to noise ratio,
   signal to interference plus noise ratio,
   received signal strength indicator, and
   transmission rate.

4. The first communication device (110) of claim 1, wherein the equalizer is a neural network based equalizer; and wherein the at least one memory and the computer program codes are also configured to, together with the at least one processor, enable the first communication device to configure the equalizer by:

determining an activation function for configuring the equalizer based on the one activation function class indicated by the configuration parameters; and
configuring the neural network based equalizer with determined activation function, to generate a multilevel neural network based equalizer.

5. The first communication device (110) of claim 1, wherein,

the first communication device is an optical network unit, and the second communication device is an optical line terminal; or
the first communication device is a user equipment, and the second communication device is a network device.

6. A second communication device (120), comprising:

at least one processor; and
at least one memory including computer program codes,
wherein the at least one memory and the computer program codes are configured to, together with the at least one processor, enable the second communication device (120) to:

determine configuration parameters to be used by a first communication device for configuring an equalizer at the first communication device, the configuration parameters indicating one activation function class of a plurality of activation function classes for configuring the equalizer; and
send to the first communication device the configuration parameters determined.

7. The second communication device (120) of claim 6, wherein the configuration parameters include at least one of:

a first indication indicating a class of the first communication device; and
a second indication indicating the one activation function class of the plurality of activation function classes
, wherein for example a class of the first communication device is associated with a modulation scheme to be used by the first communication device as configured by the second communication device.

8. The second communication device (120) of claim 6, wherein the at least one memory and the computer program codes are also configured to, together with the at least one processor, enable the second communication device to determine the configuration parameters by:

receiving from the first communication device information indicating channel conditions between the first communication device and the second communication device; and
determining, based on received information of channel conditions, the configuration parameters to be used by a first communication device for configuring the equalizer at the first communication device
, wherein for example a) the at least one memory and the computer program codes are also configured to, together with the at least one processor, enable the second communication device to determine the configuration parameters based on the received information of channel conditions by:
determining a class of the first communication device based on the received information of channel conditions; and
determining the configuration parameters to be used by a first communication device for configuring the activation function of the equalizer at the first communication device based on the determined class of the first communication device

, wherein for example b) the information of channel conditions includes at least one of:

signal to noise ratio,
signal to interference plus noise ratio,
received signal strength indicator, and
transmission rate.

9. The second communication device (120) of claim 6, wherein,

the first communication device is an optical network unit, and the second communication device is an optical line terminal; or

the first communication device is a user equipment, and the second communication device is a network device.

**10.** A method executed at a first communication device (110), comprising:

receiving from a second communication device (120) configuration parameters to be used by the first communication device (110) for configuring an equalizer at the first communication device (110), the configuration parameters indicating one activation function class of a plurality of activation function classes for configuring the equalizer; and
configuring the equalizer with the configuration parameters
, wherein for example the configuration parameters include at least one of:

a first indication indicating a class of the first communication device; and
a second indication indicating the one activation function class of the plurality of activation function classes

, wherein for example a class of the first communication device is associated with a modulation scheme to be used by the first communication device as configured by the second communication device.

**11.** The method of claim 10, further comprising:

sending to the second communication device (120) information indicating channel conditions between the first communication device (110) and the second communication device (120)
, wherein for example the information of channel conditions includes at least one of:

signal to noise ratio,
signal to interference plus noise ratio,
received signal strength indicator, and
transmission rate.

**12.** The method of claim 10, wherein a) the equalizer is a neural network based equalizer; and wherein configuring the equalizer includes:

determining an activation function for configuring the equalizer based on the one activation function class indicated by the configuration parameters; and
configuring the neural network based equalizer with determined activation function, to generate a multilevel neural network based equalizer

, and/or wherein b)

the first communication device (110) is an optical network unit, and the second communication device (120) is an optical line terminal; or
the first communication device (110) is a user equipment, and the second communication device (120) is a network device.

**13.** A method executed at a second communication device (120), comprising:

determining configuration parameters to be used by a first communication device (110) for configuring an equalizer at the first communication device (110), the configuration parameters indicating one activation function class of a plurality of activation function classes for configuring the equalizer; and
sending to the first communication device (110) the configuration parameters determined.

**14.** The method of claim 13, wherein the configuration parameters include at least one of:

a first indication indicating a class of the first communication device (110); and
a second indication indicating the one activation function class of the plurality of activation function classes

, wherein for example a class of the first communication device (110) is associated with a modulation scheme to be used by the first communication device (110) as configured by the second communication device (120).

15. The method of claim 13, wherein determining the configuration parameters includes:

receiving from the first communication device (110) information indicating channel conditions between the first communication device (110) and the second communication device (120); and
determining, based on received information of channel conditions, the configuration parameters to be used by a first communication device (110) for configuring the equalizer at the first communication device (110)

, wherein for example a) determining the configuration parameters includes:

determining a class of the first communication device (110) based on the received information of channel conditions; and
determining the configuration parameters to be used by a first communication device (110) for configuring the activation function of the equalizer at the first communication device (110) based on the determined class of the first communication device (110), wherein for example b)

the information of channel conditions includes at least one of:

signal to noise ratio,
signal to interference plus noise ratio,
received signal strength indicator, and
transmission rate.

16. The method of claim 13, wherein,

the first communication device (110) is an optical network unit, and the second communication device (120) is an optical line terminal; or
the first communication device (110) is a user equipment, and the second communication device (120) is a network device.

17. A first communication apparatus, comprising:
components for executing the method according to any of claims 10-12.

18. A second communication apparatus, comprising:
components for executing the method according to any of claims 13-16.

19. A computer-readable storage medium (1400) stored thereon with computer programs (1330), the computer programs (1330) are configured to, when executed by a processor of an apparatus, cause the apparatus to perform the method according to any of claims 10-12 and/or any of claims 13-16.

**Fig.1**

200

110 First Communication Device

120 Second Communication Device

210

220

230

240

250

260

270

Fig.2

Configure the multilevel neural network based on the configuration parameter
(i.e., specific activation function class, Special_AF_type)

# Fig.3

400

G1
ONU$_1$
ONU$_2$

G2
ONU$_3$
ONU$_4$

410 Report channel condition

OLT

420 Configure G_type

430 Generate parameter G_param (including parameter Special_AF_type)

440 Transmitting parameter G_param (including parameter Special_AF_type)

New ONU

Recovered data ← Multilevel neural network based equalizer ← Pre-processing ← ADC ← PD

Fig.4

500

1310nm laser

50G Bandwidth PAM4 upsampling | 100GS/s DAC | MZM | 20 km SSMF | VOA | SOA | 25GHz PD | Oscilloscope @160GS/s | Resampling equalization

## Fig.5

600

**Fig.6**

Fig.7A

Fig.7B

Fig.8A

Fig.8B

900

Input

Received symbols

$X_1$

$X_2$

$X_{m-1}$

$X_m$

d

d

d

Hidden
layer

Output

Fig.9A

950

Configure the multilevel neural network based on the configuration parameter
(i.e., specific activation function class, Special_AF_type)

Fig.9B

Fig.10A

EP 4 125 246 A1

Fig.10B

29

1100

1110

Receive from a second communication device configuration parameters to be used by the first communication device for configuring an equalizer at the first communication device, the configuration parameters indicating one activation function class of a plurality of activation function classes for configuring the equalizer

1120

Configure the equalizer with the configuration parameters

Fig.11

1200

1210

Determine configuration parameters to be used by a first communication device for configuring an equalizer at the first communication device, the configuration parameters indicating one activation function class of a plurality of activation function classes for configuring the equalizer

1220

Send to the first communication device determined configuration parameters

Fig.12

1300

1340

1310

Communication module

Processor

Memory 1320

RAM 1322

1324

ROM 1330

Fig.13

Fig.14

Europäisches Patentamt

European Patent Office

Office européen des brevets

# EUROPEAN SEARCH REPORT

Application Number

EP 22 18 7724

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SIMING LIU ET AL: "A Multilevel Artificial Neural Network Nonlinear Equalizer for Millimeter-Wave Mobile Fronthaul Systems", JOURNAL OF LIGHTWAVE TECHNOLOGY, vol. 35, no. 20, 15 October 2017 (2017-10-15), pages 4406-4417, XP055583930, USA ISSN: 0733-8724, DOI: 10.1109/JLT.2017.2717778 * abstract * * Section II-A * | 1-19 | INV. H04L25/03 |
| Y | KADRI HACIOG LU: "Improved Recurrent Neural Network for M-PAM Symbol Detection", IEEE TRANSACTIONS ON NEURAL NETWORKS, IEEE SERVICE CENTER, PISCATAWAY, NJ, US, vol. 8, no. 3, 1 May 1997 (1997-05-01), XP011039984, ISSN: 1045-9227 * abstract * * Sections II, III * | 1-19 | |
| Y | COSTANZO ANTONIO ET AL: "Adaptive Modulation Control for Visible Light Communication Systems", JOURNAL OF LIGHTWAVE TECHNOLOGY, IEEE, USA, vol. 39, no. 9, 2 February 2021 (2021-02-02), pages 2780-2789, XP011850382, ISSN: 0733-8724, DOI: 10.1109/JLT.2021.3056177 [retrieved on 2021-04-20] * abstract * * figure 1; table 1 * | 1-19 | |

TECHNICAL FIELDS SEARCHED (IPC)

H04L

The present search report has been drawn up for all claims

| Place of search | Date of completion of the search | Examiner |
|---|---|---|
| Munich | 17 November 2022 | Epple, Ulrich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)